# EUROPEAN PATENT APPLICATION

(11) **EP 2 687 366 A1**
(43) Date of publication of application: **22.01.2014**
(21) Application number: 13176419.3
(22) Date of filing: 12.07.2013
(51) Int. Cl.: B32B 9/04, B32B 7/12, B32B 27/30, E04F 13/14, E04F 15/08

(54) **Multilayered plate-like element**

(30) Priority: 12.07.2012 IT VR20120145
(71) Applicant: Marmotex S.r.l., 37020 Dolce (VR) (IT)
(72) Inventor: Rigoni, Vittorio, 37020 Dolcè (Verona) (IT)
(74) Representative: Feltrinelli, Secondo Andrea

(57) **Abstract**

A plate-like element (1) for standing floors, for free-standing floors, or elevated ones, tiles, base plates, coatings of ventilated walls, walls themselves, support surfaces, tables, kitchen tops or for the bathroom, or for furnishing, in which the plate-like element (1) has a visible surface (3) and comprises a first layer (2) having a base surface (4) opposite the visible surface (3) and made from porcelain gres, comprising a second layer (5) of high-density polyvinyl chloride (PVC) or high-density polyethylene (PE) or of a multi-layer composite material comprising two layers of aluminium or another metallic material and an inner layer of thermoplastic polyethylene or another suitable polymeric material, in which the plate-like element (1) comprises a gluing means (8) arranged between the first layer (2) and the second layer (5), in which the gluing means (8) is suitable for connecting the first layer (2) with the second layer (5) in a permanent manner.

## Description

### TECHNICAL FIELD OF THE INVENTION

The present invention concerns a multilayered plate-like element comprising porcelain gres or other similar materials for floors or coatings or furnishings. In particular, the multilayered plate-like element for floors or coatings or furnishings has improved mechanical characteristics with respect to those of a conventional plate of porcelain gres or other similar materials and can be used for standing floors, in particular free-standing floors, or elevated ones, tiles, base plates, coatings, in particular of ventilated walls, walls themselves, support surfaces, tables, tops or for furnishings, etc.

### STATE OF THE ART

Usually, porcelain gres is used for the production of tiles and floors.

Such a material has numerous advantages, such as impermeability and hygiene and great versatility of finishing. However, it has some drawbacks, particularly when it has small thicknesses, such as low resistance to bending and collision.

Moreover, there are currently plates of porcelain gres of high thickness, but with small dimensions of the plate. The current possible market requirements, on the other hand, are more for plates of large dimensions, in order to try to make or cover surfaces of large dimensions with the smallest possible number of pieces and joints, also for applications previously not permitted by conventional plates of porcelain gres.

Therefore, it has been found that there is a need, whilst still keeping the advantages linked to the use of porcelain gres or of other similar materials, to obtain a product having improved mechanical properties, such as bending and resistance to collision, with respect to the basic material, also in order to make large-sized plates thereof.

### PURPOSES OF THE INVENTION

A purpose of the present invention is to improve the state of the art.

Another purpose of the present invention is to provide a multi-layer plate-like element that is impermeable, unable to be attacked by corrosive substances, having excellent hygiene and versatility of application.

A further purpose of the present invention is to provide a multi-layer plate-likeelement having improved mechanical properties.

Another purpose of the present invention is to provide a multi-layer plate-like element for making floors or coatings of any type, even of large dimensions.

In accordance with an aspect of the invention a multi-layer plate-like element according to independent claim 1 is foreseen.

The dependent claims refer to preferred and advantageous embodiments of the invention.

### BRIEF DESCRIPTION OF THE DRAWINGS

Further characteristics and advantages of the invention will become clearer from the description of a multilayered plate-like element, illustrated for indicating purposes in the attached drawings, in which:

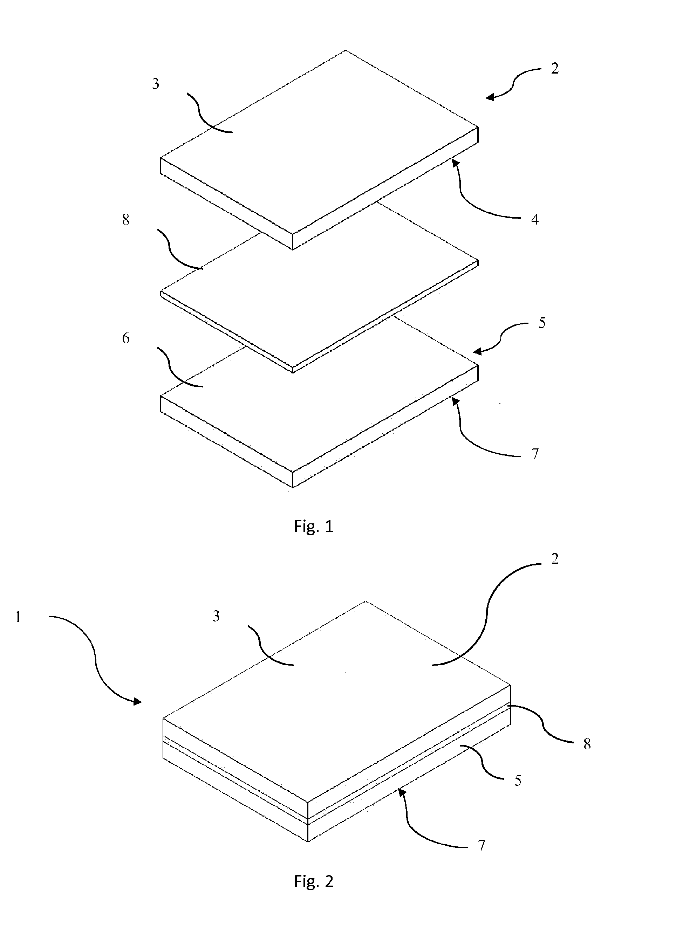

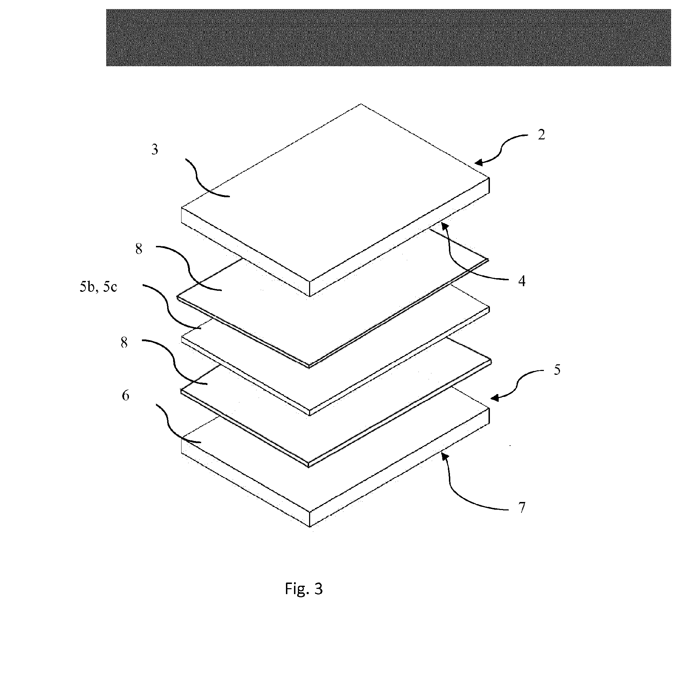

figure 1 is an exploded perspective view of the multilayered plate-like element according to the present invention;
figure 2 is a perspective view of the assembled plate-like element according to figure 1.

### EMBODIMENTS OF THE INVENTION

With reference to the attached figures, a plate-like element 1 is illustrated.

The plate-like element 1 comprises a plurality of layers.

The plate-like element 1 can be used for floors or coatings or furnishings. In particular, the plate-like element 1 can be used for standing floors, in particular free-standing floors, or elevated ones, tiles, base plates, coatings, for example of ventilated walls, walls themselves, support surfaces, tables, for kitchen tops or for the bathroom, or for furnishing, etc.

The plate-like element 1 can have any shape and size. In particular, the plate-like element 1 can reach considerable dimensions, even up to 3 metres in length by about 60-150 centimetres in width.

In particular, the plate-like element 1 comprises a first layer 2 of porcelain gres.

Gres is a ceramic material obtained by natural clay mixtures.

Porcelain gres is obtained by mixing ceramic clays, feldspars, kaolins and sand. Such materials are first ground until a powder is obtained having homogeneous grain size suitable for pressing.

Firing conventionally takes place at a temperature of about 1150°C - 1250°C. The firing process determines the ceramization/reification of the paste.

Porcelain gres is resistant to high temperatures thanks to its high melting point.

Moreover, porcelain gres is a hygienic and completely impermeable material, thus capable of preventing infiltrations of humidity or of various liquids with which they can come into contact.

The first layer 2 of porcelain gres can have any type of surface finish, for example glossy, opaque, nappa, glazed, etc.

The plate-like element 1 has an identical configuration in plan to that of the first layer 2 that makes it up.

In particular, the plate-like element 1 has a visible surface 3, corresponding to the outer surface of the first layer 2. On the outer surface of the first layer 2 or on the visible surface 3 of the plate-like element 1 the desired finish is applied/made based on the tastes of the user and the end use of the element itself.

Such a surface finish is usually made before the assembly of the plate-like element 1, as better specified hereafter.

Moreover, the first layer 2 comprises a base surface 4, opposite its outer surface.

The first layer 2 has a low thickness. In particular, such a thickness is comprised between 2 millimetres and 10 millimetres. In a version of the invention, such a thickness is comprised between 4 millimetres and 7 millimetres. In yet another version of the invention, the thickness of the first layer 2 is 6 millimetres.

The plate-like element 1 also comprises a second layer 5.

In a version of the invention, the second layer 5 comprises high-density polyvinyl chloride, commonly abbreviated to PVC.

Such high-density PVC is a material that, in combination with the first layer 2 of porcelain gres, allows a plate-like element 1 to be obtained that is extremely resistant to breaking, thus overcoming the fragility of the thin first layer 2 of porcelain gres, such fragility being an especially bad problem when the plate-like element 1 is of great dimensions.

In particular, the second layer 5 comprising high-density PVC makes it possible to obtain the improved mechanical characteristics as indicated more clearly hereafter.

In a further version of the invention, the second layer 5 comprises high-density polyethylene, commonly abbreviated to PEVC.

Such high-density PEVC is a material that, in combination with the first layer 2 of porcelain gres, allows a plate-like element 1 to be obtained that is extremely resistant to breaking, thus overcoming the fragility of the thin first layer 2 of porcelain gres, such fragility being an especially bad problem when the plate-like element 1 is of great dimensions.

In particular, the second layer 5 comprising high-density PE makes it possible to obtain the improved mechanical characteristics as indicated more clearly hereafter.

The second layer 5 can therefore be defined as rigid.

Moreover, the second layer 5 of high-density PCV has the following advantages with respect to conventional PVC or to PVC foams: it is a rigid and above all compact material, unlike foams that have more or less open cells and are thus not a compact material. Foamed material, such as PVC foams, however, allows a lower rigidity of the plate-like element 1.

High-density PE, with respect to analogous materials, also allows better rigidity, thus being able to act as a support for the first layer 2 of porcelain gres.

In a further version of the invention, the second layer 5, at the adhesion interface with the first layer 2 of porcelain gres, has an intermediate layer 5b made from a reinforcing mesh or wicker. Such a reinforcing mesh or wicker is made from fibreglass. The grammage of such reinforcing mesh or wicker can be defined as 300, 600 or 900. In a preferred embodiment of the invention, the grammage 300 is used.

The presence, in the second layer 5, of the intermediate layer 5b of reinforcing mesh or wicker, makes it possible to obtain a plate-like element 1 that is even more resistant to breaking and elastic, and thus safer, with respect to the plate-like element 1 in which such an intermediate layer 5b of reinforcing mesh or wicker is not present. Indeed, such reinforcing mesh or wicker acts as an elastic holding element between the first layer 2 of porcelain gres, the second layer 5 and the gluing means 8, as will be explained more clearly hereafter.

In a further version, the second layer 5 comprises a composite material comprising an upper layer and a lower layer made from aluminium, inside which there is an inner layer of thermoplastic polyethylene or other suitable polymeric material. In a version of the invention, the polyethylene used is high-density polyethylene.

The upper layer and the lower layer have a thickness of 0.3 millimetres. The inner layer has a thickness that can vary between 2 millimetres and 6 millimetres.

In such a version of the invention, the second layer 5, at the interface with the first layer 2 of porcelain gres, comprises an intermediate layer 5c comprising a layer of high-density PVC or a layer of high-density polyethylene or a reinforcing mesh or wicker 5b.

In a version of the invention, such composite material is known by the trade name Alucobond.

In such a case, the mechanical characteristics of the composite material of the second layer 5 are added to by the mechanical characteristics of the material that makes up the intermediate layer 5c, obtaining a plate-like element 1 with even better performance, in terms of resistance to breaking, rigidity and bending, capable of reducing the thickness of the various layers that make up the plate-like element 1 and at the same time ensuring a wide range of applications thereof, even when present in large-sized plates.

The second layer 5 is a support layer for the first layer 2. Indeed, the porcelain gres, being of very low thickness, does not, in itself, possess the mechanical properties suitable for its use for large-sized applications. Moreover, the association of the first layer 2 with the second layer 3 gives improved mechanical properties, in order to allow its use also for non-conventional uses of porcelain gres.

At the same time, however, the low thickness of the first layer 2 gives substantial advantages in terms of reduction of costs and of the overall weight of the end material. Despite such a low thickness, however, it is possible to make large-sized plate-like elements, thanks to the coupling of the first layer 2 with the second layer 5.

Moreover, such a material has a high chemical stability and a high solidity, together with a high modulus of elasticity and the ability to absorb water in a very limited way.

The second layer 5 has an upper surface 6, facing towards the base surface 4 of the first layer 2.

In the version of the invention in which the second layer 5 comprises a composite material, the upper layer of the composite material corresponds to the upper surface 6.

The intermediate layer 5b or 5c is in contact with such an upper surface 6.

The second layer 5 also comprises a support surface 7, opposite the upper surface 6.

In the version of the invention in which the second layer 5 comprises a composite material, the lower layer of the composite material corresponds to the support surface 7.

The support surface 7 of the second layer 5 corresponds to the support surface of the plate-like element 1.

Such a support surface 7, opposite the visible surface of the plate-like element 1 and of the first layer 2, rests on the surface to be covered, or acts as a lower surface, in the case of a table or a suspended floor, etc.

The support surface 7 usually does not have a particular aesthetically pleasing surface finish, precisely due to the fact that it is not usually visible.

In a further version of the invention, however, the support surface 7 can have a certain finish, in order to make such a part of the plate-like element 1 also aesthetically pleasing.

The second layer 5 also has a low thickness, comprised between 1 millimetre and 10 millimetres. In a version of the invention, the thickness of the second layer 5 is comprised between 3 millimetres and 7 millimetres. In yet another version, the second layer 5 has a thickness of 4 millimetres.

The plate-like element 1 according to the present invention also comprises a gluing means 8.

The gluing means 8 is present in the form of a thin layer of gluing material that is applied, in a substantially homogeneous manner, between the first layer 2 and the second layer 5 of the plate-like element 1 or between the first layer 2 and the intermediate layer 5b, 5c of the plate-like element 1 or between the second layer 5 and the intermediate layer 5b, 5c.

Therefore, the gluing means 8 is arranged between the first layer 2 and the second layer 5 or, possibly, between the second layer 5 and the intermediate layer 5b, 5c and between the latter and the first layer 2.

The gluing material that constitutes the gluing means 8 comprises a polyurethane-based bicomponent glue or an epoxy glue.

The gluing means 8, being fluid, gets distributed in a homogeneous and even manner, in order not to create discontinuity in thickness or distribution between the first layer 2 and the second layer 5 and, possibly, the intermediate layer 5b, 5c when present.

The homogeneous distribution of the gluing means 8, and its low thickness, give the plate-like element 1 a strong adhesion between the first layer 2 and the second layer 5, at the same time improving the mechanical characteristics of the plate-like element 1.

The thickness of the gluing means 8 is at most about 2 millimetres. Alternatively, the thickness of the gluing means 8 can vary according to the type, the dimensions and the thickness of the materials that constitute the first layer 2 and the second layer 5. The gluing means 8 is applied manually, through suitable spatulas or other suitable instruments, or automatically.

The gluing means 8 can possibly comprise a catalyst suitable for the purpose.

In a version of the invention the gluing means 8 is applied onto the upper surface 6 of the second layer 5.

In a further version of the invention, the gluing means 8 is applied onto the base surface 4 of the first layer 2 or, possibly, both onto the upper surface 6 of the second layer 5 and onto the base surface 4 of the first layer 2.

In yet another version of the invention, the gluing means 8 is applied onto at least one surface of the intermediate layer 5b, 5c.

The plate-like element 1 can include, between the second layer 5 and the gluing means 8 and/or the first layer 2 and the gluing means 8 and/or between the intermediate layer 5b, 5c and the gluing means 8, a layer of primer (not illustrated).

In a version of the invention the primer is applied onto the upper surface 6 of the second layer 5.

In a further version of the invention, the primer is applied onto the base surface 4 or, possibly, both onto the upper surface 6 of the second layer 5 and onto the base surface 4 of the first layer 2.

In yet another version, the primer is applied onto at least one surface of the intermediate layer 5b, 5c.

The primer is applied in order to "prepare" the surface onto which it is applied to receive the gluing means 8.

In particular, the primer increases the adhesion of the gluing means 8 above all when applied onto the smooth surface of the layer of aluminium or other metallic material, acting as adhesion promoter.

The primer can be a primer compatible with the gluing means 8 used or another material suitable for the purpose of coupling and promoting the gluing of the material that constitutes the gluing means 8 and the material that constitutes the first layer 2 and/or the second layer 5.

In particular, the polyurethane primer is useful when applied onto high-density PVC or onto high-density PE on the composite material that makes up the second layer 5.

The presence of a primer, with respect to other surface treatments carried out thanks to the use of high temperatures or plasmas, makes it possible to obtain a plate-like element 1 that is substantially cost-effective and easy to make, since all of the layers that make it up are glued and worked "cold", in other words without the use of high temperatures or plasmas.

In this way, the structure of the layers on which the primer is applied do not undergo any variation caused by high temperatures, thus avoiding the occurrence of cracks, fissures, defects or structural modifications in them.

Therefore, the plate-like element 1, once the first layer 2 and the second layer 5 are glued together through the interposition of a gluing means 8, and possibly of a relative primer, and possibly of an intermediate layer 5b, 5c, is of a total thickness at most of about 10 millimetres in a particular version of the present invention.

The assembled plate-like element 1 has a hygienic visible surface 3, which does not absorb humidity or other liquids, resistant to thermal shocks, to light and to heat, a quality given by the material that constitutes the first layer 2. Therefore, the visible surface 3 is made from a natural and ecological material, without chemical components and thus without any risk of fumes of chemical products or harmful solvents.

A the same time, however, the plate-like element 1 has a lower weight with respect to a plate of the same dimensions and thickness made just from the material that makes up the first layer 2. Moreover, the maximum dimensions that can be reached by the plate-like element 1 are greater than those of a plate made just from the material that makes up the first layer 2.

The presence of the possible intermediate layer 5b, 5c makes it possible to further reduce the thickness of the other layers that make up the plate-like element 1, at the same time also ensuring excellent mechanical properties.

Below the second layer 5, in particular adhering to at least part of its support surface 7, there can be at least one further layer of different material like, for example, polystyrene.

Such an at least one further layer can become necessary based on the different applications for which the plate-like element 1 is intended, in particular also in relation to the maximum thicknesses to be reached.

In a version of the invention, such an at least one further layer can be applied onto the peripheral portion of the support surface 7 of the second layer 5.

The assembled plate-like element 1 has a low weight; moreover, it has a low thickness.

The assembled plate-like element 1 has improved mechanical characteristics with respect to its unassembled components. In particular, the plate-like element 1 has a high resistance to bending; in particular, the resistance to bending of the plate-like element 1 is greater than 47 MPa, in particular it is about 55 MPa.

In the further version, in which the second layer 5 comprises the composite material indicated above, the resistance to bending of the plate-like element 1 is greater than 63 MPa, in particular about 75 even up to 85 MPa. Such values are calculated in accordance with standard EN 12372:2007.

Moreover, the plate-like element 1 has a good resistance to collision and good tenacity, considered as the resistance to breaking due to a sudden stress; in particular, it has an energy impact resistance of about 4 Joules. In the further version, in which the second layer 5 comprises the composite material indicated above, the energy impact resistance is about 6 or 7 Joules. Such a value is calculated according to standard EN 14158:2004.

The plate-like element 1 is resistant to abrasion, does not shatter and has a more consistent structure with respect to the single material that makes up the first layer 2.

The plate-like element 1, therefore, by improving the mechanical characteristics of the porcelain gres, substantially increases the uses and applications thereof.

The present invention thus conceived can undergo numerous modifications and variants all covered by the scope of protection offered by the claims.

## Claims

1. Plate-like element (1) for floorings to be floor-mounted, in particular free-resting floor-mounted, or raised, tiles, basements, coatings for example of ventilated walls, walls, supporting surfaces, tables, cooking surfaces or for bathrooms, or for furnishing purposes, wherein said plate-like element (1) has an visible surface (3) and comprises a first layer (2), wherein said first layer (2) comprises a base surface (4) opposite to said visible surface (3) and it is made of porcelain stoneware or another similar material, wherein said plate-like element (1) comprises a second layer (5) and a gluing means (8) interposed between said first layer (2) and said second layer (5), wherein said gluing means (8) is adapted to connect said first layer (2) to said second layer (5) **characterised in that** said second layer (5) is made of high density polyvinyl chloride (PVC) or high density polyethylene or of a multi-layer composite material comprising two layers made of aluminium or another metal material and an inner layer of thermoplastic polyethylene or another suitable polymeric material, wherein said second layer (5) is permanently fastened to said first layer (2).

2. Plate-like element (1) according to claim 1, wherein said second layer (5) is rigid.

3. Plate-like element (1) according to claim 1 or 2, wherein said second layer (5) comprises an intermediate layer (5c) realised in high density PVC or in high density polyethylene o in a mesh or in a reinforcement mat (5c) or in a mesh or in a reinforcement mat in fiber glass.

4. Plate-like element (1) according to any one of the previous claims, wherein said first layer (2) has a thin thickness, ranging from 2 to 10 millimetres or from 4 to 7 millimetres or a thickness of 6 millimetres.

5. Plate-like element (1) according to any one of the previous claims, wherein said second layer (5) has a thin thickness, wherein said thickness ranges from 1 millimetres to 10 millimetres or from 3 millimetres to 7 millimetres or wherein the thickness of said second layer is 4 millimetres.

6. Plate-like element (1) according to any one of the previous claims, wherein said gluing means (8) comprises a gluing material or a polyurethane-based two-component glue or another material suitable for the purpose.

7. Plate-like element (1) according to any one of the previous claims, wherein said gluing means (8) has a homogeneous thickness between said first layer (2) and said second layer (5) or between said first layer (2) and said intermediate layer (5b, 5c) and said second layer (5), or wherein said gluing means (8) has a maximum thickness of 2 millimetres.

8. Plate-like element (1) according to any one of the previous claims, wherein said second layer (5) has an upper surface (6), facing towards said base surface (4) of said first layer (2), and a resting surface (7), opposite to said upper surface (6), said plate-like element (1) comprising said gluing means on said upper surface (6) ofsai second layer (5) and/or on said base surface (4) of said first layer (2) and/or on at least one surface of said intermediate layer (5b, 5c).

9. Plate-like element (1) according to any one of the previous claims, comprising a primer adapted to facilitate gluing between said gluing means (8) and said first layer (2) and/or said second layer (5) and/or intermediate layer (5b, 5c) and arranged on said upper surface (6) of said second layer (5) and/or on said base surface (4) of said first layer (2) and/or on at least one surface of said intermediate layer (5b, 5c).

10. Plate-like element (1) according to any one of the previous claims, comprising at least a further layer in contact with at least a part of said resting surface (7) of said second layer (5).

11. Plate-like element (1) according to the previous claim, wherein said at least one further layer is made of polystyrene.

12. Plate-like element (1) according to any one of the previous claims, wherein said plate-like element (1) or said visible surface (3) have a dimension in plan up to 3 metres x 1.5 metres.

13. Plate-like element (1) according to any one of the previous claims, wherein said plate-like element (1) or said visible surface (3) have a dimension in plan up greater than 3 metres x 1.5 metres.

14. Plate-like element (1) according to any one of the previous claims, wherein said plate-like element (1) has a bending strength more than 47 Mpa, or of 55 Mpa or of 63 Mpa or of 75 MPa or of 85 Mpa.

15. Plate-like element (1) according to any one of the previous claims, wherein said plate-like element (1) has an energy impact resistance of 4 Joule or of 7 Joule.
